# EUROPÄISCHE PATENTANMELDUNG

(11) **EP 0 947 458 A1**
(43) Veröffentlichungstag der Anmeldung: **06.10.1999**
(21) Anmeldenummer: 99103876.1
(22) Anmeldetag: 01.03.1999
(51) Int. Cl.: B65H 37/04, B32B 31/00

(54) **Vorrichtung zum Verbinden von flachen Bändern mit einem Bogen**

(30) Priorität: 30.03.1998 DE 19814063
(71) Anmelder: Louda Systems GmbH, 86368 Gersthofen (DE)
(72) Erfinder: Bieringer, Arne, 86415 Mering (DE); Hentschel, Lothar, 82024 Taufkirchen (DE)
(74) Vertreter: Charrier, Rolf, Dipl.-Ing.

(57) **Zusammenfassung**

Um Hologrammbänder auf einem Bogen, aus dem Wert- und/oder Personalkarten ausgestanzt werden, aufzubringen, ist oberhalb eines Applikationstischs (1) ein Rahmen (2) angeordnet, der in Richtung der Kartenreihen verschiebbar ist. Am Rahmen (2) ist pro Kartenreihe eine Vorratsrolle (11) des Bandes (12) drehbar gelagert. Weiterhin lagert der Rahmen (2) pro Kartenreihe eine Applikationsvorrichtung. Diese ist vom und zum Applikationstisch (1) bewegbar. Der Rahmen (2) verfährt aus einer Grundstellung in einem ersten Takt von einem Ende zum anderen Ende des Applikationstischs (1) und legt hierbei durch eine Transportvorrichtung einen Bogen (18) auf dem Applikationstisch ab. Hierbei ist die Applikationsvorrichtung vom Applikationstisch (1) abgehoben. Nach Beendigung des ersten Takts wird das Ende des Bands in Kontakt mit dem Bogen gebracht und die Applikationsvorrichtung auf dieses Ende abgesenkt. Hierbei wird das Band mit dem Bogen verbunden. In einem zweiten Takt bewegt sich der Rahmen (2) bei abgesenkter Applikationsvorrichtung zurück zum einen Ende des Applikationstisches, wobei das Band mit dem Bogen verbunden wird.

## Beschreibung

Die Erfindung betrifft eine Vorrichtung zum Verbinden von flachen Bändern mit einem Bogen nach dem Oberbegriff des Anspruches 1.

Sollen Wert- und/oder Personalkarten zum Beispiel mit einem Hologramm versehen werden, dann werden die Hologrammbänder von Hand auf Bögen aufgebracht, aus denen bei einem späteren Arbeitsgang die Wert- und/oder Personalkarten ausgestanzt werden. Auf den Bögen sind die auszustanzenden Karten reihenweise angeordnet. Das manuelle Aufbringen der Hologrammbänder ist zeitaufwendig und teuer. Insbesondere werden durch dieses manuelle Aufbringen die sonst automatisierten Arbeitsschritte bei der Herstellung der Karten unterbrochen.

Es besteht die Aufgabe, eine Vorrichtung zur Verfügun zu stellen, mit welcher ein automatisches Applizieren von flachem bandartigem Material auf Karten möglich ist.

Gelöst wird diese Aufgabe mit den Merkmalen des Anspruches 1. Vorteilhafte Ausgestaltungen sind den Unteransprüchen entnehmbar.

Ein Ausführungsbeispiel wird nachfolgend anhand der Zeichnungen näher erläutert. Es zeigen:
- **Fig. 1**: einen Schnitt durch die Vorrichtung und
- **Fig. 2**: eine Draufsicht aufdiese Vorrichtung.

Die Vorrichtung weist einen Applikationstisch 1 sowie einen darüber angeordneten Rahmen 2 auf. Vor dem einen Ende des Tischs befindet sich ein Bogenstapel 3, dessen

Bögen mit Bändern zu versehen sind. Hinter dem anderen Ende des Applikationstischs 1 befindet sich ein weiterer Bogenstapel 4, dessen Bögen mit den Bändern versehen sind.

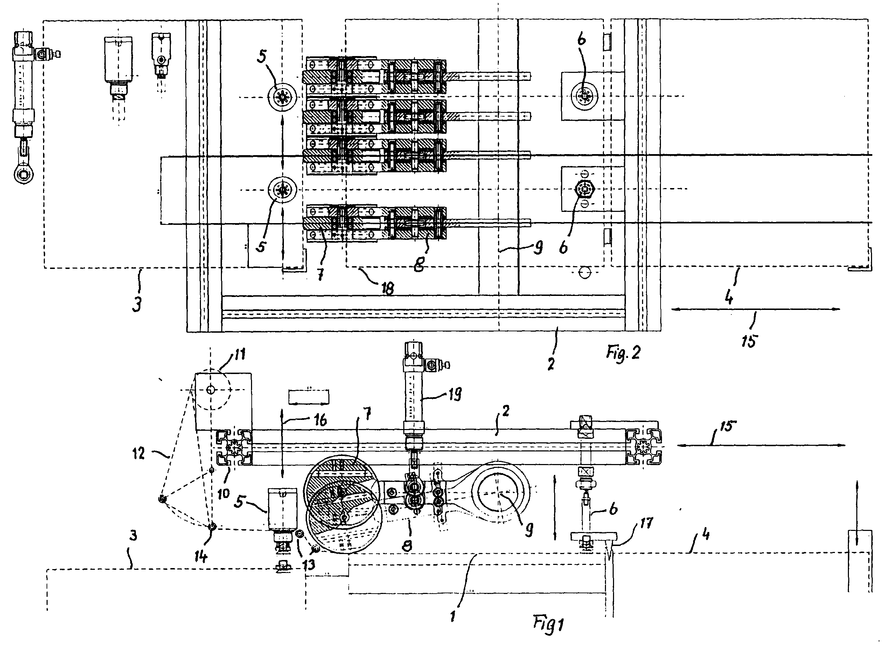

In der in den Figuren 1 und 2 dargestellten Lage des Rahmens 2 befindet sich dieser in seiner Grundstellung. Die Abmessungen des Rahmens 2 sind größer als die Abmessungen des Applikationstischs 1.

Im Bereich des einen Endes des Rahmens 2 sind zwei Hubsauger 5 angeordnet. In der Grundstellung des Rahmens 2 befinden sich die Hubsauger 5 im Bereich des Bogenstapels 3. Im Bereich des anderen Endes des Rahmens 2 sind zwei weitere Hubsauger 6 angeordnet, die in der Grundstellung des Rahmens 2 sich im Bereich des anderen Endes des Tisches 1 befinden. Zwischen den Hubsaugern 5, 6 sind mehrere beheizbare Rollen 7 vorgesehen, deren Anzahl gleich der Anzahl der auf die Bögen aufzubringenden Bändern entspricht. Jede Rolle 7 ist an einem schwenkbaren Arm 8 angeordnet, die um eine gemeinsame Achse 9 schwenkbar sind. Am einen Querträger 10 sind Vorratsrollen 11 drehbar gelagert, deren Anzahl der Anzahl der aufzubringenden Bänder entspricht und welche jeweils ein Hologrammband bevorraten. Das jeweilige Hologrammband 12 wird über Führungen 13, 14 von der Vorratsrolle 11 abgezogen, wobei die Führung 14 als Pendelführung ausgebildet ist. Hinter den Hubsaugern 6 ist ein Messer 17 angeordnet, das zusammen mit den Hubsaugern 6 vertikal bewegbar ist.

Der Schlitten 2 ist in Pfeilrichtung 15 horizontal verschiebbar.

Die Arbeitsweise ist folgende: In der gezeigten Grundstellung des Rahmens 2 wird der Rahmen 2 in Pfeilrichtung 16 abgesenkt, wobei die Hubsauger 5 in Kontakt mit dem obersten Bogen des Stapels 3 kommen. Bei dieser Absenkung treten die Hubsauger 6 in Kontakt mit dem Bogen 18 auf dem Applikationstisch 1, der im vorhergehenden Arbeitsrhythmus mit Bändern versehen wurde. Die Rolle 7 ist durch den Zylinder 19 in ihre obere Stellung verschwenkt. Die Hubsauger 5 saugen den obersten Bogen des Stapels 3 an. Die Hubsauger 6 erfassen den auf dem Applikationstisch 1 befindlichen Bogen. Gleichzeitig werden die Bänder zwischen den auf dem Applikationstisch 1 befindlichen Bogen und den zuvor auf dem Stapel 4 abgelegten Bogen durchtrennt. Der Rahmen 2 wird sodann angehoben und in Pfeilrichtung 15 nach rechts verfahren, bis der von den Hubsaugern 5 erfaßte Bogen sich über dem Applikationstisch 1 befindet und der Bogen des Applikationstischs sich über dem Bogenstapel 4 befindet. Der Bogen des Stapels 3 wird somit auf dem Applikationstisch 1 abgelegt und der Bogen 18, der sich zuvor auf dem Applikationstisch 1 befinden hat, wird beim Bogenstapel abgelegt. In dieser Ablagestellung des Rahmens 2 befinden sich die Rollen 7 am anderen Ende des Tischs 1.

Der Rahmen 2 wird nunmehr angehoben und die Rollen 7 nach unten verschwenkt, bis sie jeweils in Kontakt mit einem Band kommen und dieses gegen den Bogen pressen. Der Rahmen 2 wird sodann nach links verschoben, wobei die Rollen 7 in Kontakt mit den Bändern bleiben. Bei dieser Verschiebebewegung des Rahmens 2 werden die Bänder 12 von den Vorratsrollen 11 abgezogen. Haben die Rollen 7 wieder das eine Ende des Applikationstischs 1 erreicht, werden sie nach oben verschwenkt, worauf dann der Arbeitszyklus durch Absenken des Rahmens 2 von neuem beginnt.

Anstelle des Absenkens des Rahmens 2 können auch die Hubsauger 5, 6 vertikal verschiebbar gelagert sein. Die Hologrammbänder 12 können über ihre gesamte Länge mit den Bögen 18 versiegelt werden. Es ist jedoch auch möglich, die Rollen 7 so zu gestalten, daß die Verbindung zwischen den Bändern und den Bögen punktuell erfolgt.

## Patentansprüche

1. Vorrichtung zum Verbinden von flachen Bändern, z.B. von Hologrammbändern mit einem Bogen, aus dem Wert- und/oder Personalkarten ausgestanzt werden und bei dem die auszustanzenden Karten reihenweise angeordnet sind, **dadurch gekennzeichnet,** daß oberhalb eines Applikationstischs (1) ein Rahmen (2) angeordnet ist, der in Richtung der Kartenreihen verschiebbar ist, am Rahmen (2) pro Kartenreihe eine Vorratsrolle (11) des Bands (12) drehbar gelagert ist, am Rahmen (2) pro Kartenreihe eine Applikationsvorrichtung gelagert ist, die vom und zum Applikationstisch (1) bewegbar ist, der Rahmen (2) aus einer Grundstellung in einem ersten Takt von einem Ende zum anderen Ende des Applikationstischs (1) verfahrbar ist und hierbei durch eine Transportvorrichtung ein Bogen (18) auf dem Applikationstisch (1) abgelegt wird und die Applikationsvorrichtung vom Applikationstisch (1) abgehoben ist, nach Beendigung des ersten Takts das Ende des Bands (12) in Kontakt mit dem Bogen (18) bringbar ist und die Applikationsvorrichtung auf dieses Ende abgesenkt wird und der Rahmen (2) in einem zweiten Takt bei abgesenkter Applikationsvorrichtung zurück zum einen Ende des Applikationstischs (1) bewegbar ist.

2. Vorrichtung nach Anspruch 1, **dadurch gekennzeichnet,** daß die eine Transportvorrichtung am Rahmen (2) angeordnet ist.

3. Vorrichtung nach Anspruch 2, **dadurch gekennzeichnet,** daß die eine Transportvorrichtung durch Hubsauger (5) gebildet wird, die in Grundstellung des Rahmens (2) auf einem Bogenstapel (3) vor dem einen Ende des Applikationstischs (1) absenkbar sind.

4. Vorrichtung nach einem der Ansprüche 1 bis 3, **dadurch gekennzeichnet,** daß eine weitere Transportvorrichtung vorgesehen ist, die während des ersten Takts den mit Bändern versehenen (18) vom Applikationstisch zu einem Bogenstapel (4) hinter dem anderen Ende des Applikationstisch (1) abstapelt.

5. Vorrichtung nach Anspruch 4, **dadurch gekennzeichnet,** daß die weitere Transportvorrichtung am Rahmen (2) angeordnet ist.

6. Vorrichtung nach Anspruch 5, **dadurch gekennzeichnet,** daß die weitere Transportvorrichtung durch Hubsauger (6) gebildet wird, die in Grundstellung des Rahmens (2) im Bereich des anderen Endes des Applikationstischs (1) auf den mit Bändern versehenen Bogen (18) absenkbar sind.

7. Vorrichtung nach einem der Ansprüche 1 bis 6, **dadurch gekennzeichnet**, daß die Applikationsvorrichtung aus einer beheizbaren Rolle (7) besteht.

8. Vorrichtung nach Anspruch 7, **dadurch gekennzeichnet**, daß die Rolle (7) an einem schwerkbaren Arm (8) angeordnet ist.

9. Vorrichtung nach einem der Ansprüche 4 bis 8, **dadurch gekennzeichnet,** daß am Rahmen (2) ein Trennmesser (17) angeordnet ist, das in Grundstellung des Rahmens (2) die Bänder (12) zwischen dem abgestapelten Bogen und dem auf dem Applikationstisch (1) liegenden und mit Bändern versehenen Bogen (18) abtrennt.
